# EUROPÄISCHE PATENTSCHRIFT

(11) **EP 2 776 494 B1**
(45) Veröffentlichungstag und Bekanntmachung des Hinweises auf die Patenterteilung: **02.05.2018**
(21) Anmeldenummer: 12798596.8
(22) Anmeldetag: 07.11.2012
(51) Int. Cl.: C08J 5/04, C08K 7/14, C08J 9/00, C08J 5/08, C08J 11/06

(54) **THERMOPLASTISCHER WERKSTOFF ENTHALTEND RECYCLING-POLYOLEFIN UND GLASFASERN**
THERMOPLASTIC MATERIAL CONTAINING RECYCLED POLYOLEFIN AND GLASS FIBRES
MATÉRIAU THERMOPLASTIQUE À BASE DE POLYOLÉFINE RECYCLÉE ET DE FIBRES DE VERRE

(30) Priorität: 07.11.2011 DE 102011117760
(43) Veröffentlichungstag der Anmeldung: 17.09.2014
(73) Patentinhaber: KRAIBURG STRAIL GmbH & Co. KG, 84529 Tittmoning (DE)
(72) Erfinder: Brauer, Hans-Joachim, 12203 Berlin (DE)
(74) Vertreter: RLTG
(86) Internationale Anmeldenummer: PCT/DE2012/001062
(87) Internationale Veröffentlichungsnummer: WO 2013/067990

(56) Entgegenhaltungen:
- EP-A1- 1 460 166
- EP-A1- 2 169 000
- WO-A1-98/06778
- US-A- 5 030 662
- US-A- 5 916 932

## Beschreibung

Die vorliegende Erfindung nimmt die Priorität der deutschen Anmeldung DE 10 2011 117 760 (Anmeldetag 07.11.2011) in Anspruch und betrifft eine Eisenbahnschwelle aus einem thermoplastischen Werkstoff mit verbesserten mechanischen Eigenschaften.

### Hintergrund und Stand der Technik

Aus dem Stand der Technik ist bekannt, Glasfasern in verschiedener Weise in Kunststoff einzuarbeiten, um dessen mechanische Eigenschaften zu verbessern (s. z. B. DE10150678, DE19819750C2). Weiterhin ist bekannt Glasfaservlies als Zusatzkomponente in Recyclingpolymere einzuarbeiten und dadurch thermoplastische Werkstoffe herzustellen (DE19503632C1).

Für bestimmte Anwendungen, bei denen sehr hohe mechanische Belastungen auftreten, wie zum Beispiel Bahnschwellen wäre es wünschenswert Kunststoffmaterialien verwenden zu können. Besonders wünschenswert wäre es, hierfür Recyclingmaterialien verwenden zu können, um die natürlichen Ressourcen zu schonen. Für die Zulassung als Eisenbahnschwellen müssen die Materialien die Zulassungsbestimmungen der DIN EN 1346-4 erfüllen. Die Schwellen müssen geeignet sein, die auftretenden Vertikal- und Horizontalkräfte aufzunehmen. Dies betrifft nicht nur die Achslasten der Schienenfahrzeuge, sondern auch die Führungskräfte der Fahrzeuge quer zum Gleis (Schlingerbewegungen), Führungskräfte in Kurven (Fliehkräfte) sowie Längskräfte durch Beschleunigung und Verzögerung. Das Anforderungsprofil umfasst dabei auch eine Verwendbarkeit auf Hochgeschwindigkeitsstrecken. Die Schwellen sollen dabei deutlich länger haltbar sein als die bisher verwendeten Holz- bzw. Betonschwellen.

Die bislang für diesen Zweck getesteten Materialien haben sich hierfür noch nicht als ausreichend belastbar erwiesen. So sind z.B. die für die USA getesteten Schwellen für die dort üblichen Eisenbahngeschwindigkeiten, das heißt 70 - 100 km/h, allerhöchstens 144 km/h (90 m/hr) ausgelegt. Derartige Schwellen sind für Hochgeschwindigkeitsstrecken, die mit Geschwindigkeiten von über 200 km/h, teilweise auch mit über 300 km/h, befahren werden, nicht verwendbar. Es besteht daher Bedarf an neuen Materialien zur Herstellung hochbelastbarer Formkörper, wie beispielsweise Bahnschwellen, die verbesserte mechanische Eigenschaften aufweisen.
Eine aus thermoplastischem Werkstoff aufgebaute Eisenbahnschwelle gemäß dem Oberbegriff des Anspruchs 1 ist aus der US-A-5 916 932 bekannt. WO 98/06778 offenbart ein Verfahren zur Formgebung eines Bauteils aus einem Polymerverbundwerkstoff mit einem geschäumten inneren Kern, wobei das Bauteil eine Eisenbahnschwelle ist und die Polyolefine Abfall- oder wiedergewonnenePolyolefine sind.

### Grundzüge der Erfindung

Es wurde nun gefunden, dass überraschenderweise ein thermoplastischer Werkstoff enthaltend Thermoplaste, insbesondere Polyolefine, und beschichtete Glasfasern diese Anforderungen in hervorragender Weise erfüllt und darüber hinaus zusätzliche, für den Fachmann überraschende, Vorteile aufweist. Die Vorzüge des erfindungsgemäß eingesetzten Werkstoffes kommen insbesondere in Form von integral geschäumten Formkörpern zur Geltung.
Das erfindungsgemäß eingesetzte Material besteht im Wesentlichen aus einer Eisenbahnschwelle aus thermoplastischen Polyolefinen, wie beispielsweise Polyethylen (z.B.: HD PE, MD PE, LLD PE, UHM PE) und Polypropylen (z.B.: PP, PP CoPo) und Gemischen hiervon. Erfindungsgemäß können Zusätze von weiteren Kunststoffen enthalten sein, wobei diese Zusätze einen Anteil von 5 - 10% nicht übersteigen sollten. Bei den erfindungsgemäß eingesetzten thermoplastischen Kunststoffen handelt es sich um Recyclingkunststoffe (typischerweise: post consumer waste) wie sie beispielsweise aus bereits verwendeten sog. formstabilen Kunststoffbehältern, wie z.B.: Flaschen, Kanistern, Fässern aus Polyethylen oder Polypropylen vorliegen.
Überraschenderweise sind insbesondere Kunststoffe aus Ölgebinden besonders für die Herstellung der erfindungsgemäß eingesetzten Materialien geeignet.
Die zur Herstellung des neuartigen Materials eingesetzten Sekundärrohstoffe können in Form von Mahlgut, Granulaten, Pellets oder Agglomeraten vorliegen.
Für besonders belastbare Materialien eignen sich besonders Produktionsabfälle von besonders hochwertigen HDPE Materialien, wie sie in der Produktion hochwertiger Kunststoffteile anfallen.

Für die Herstellung des erfindungsgemäß eingesetzten Werkstoffs weiterhin erforderliche Komponenten sind Glasfasern, die ebenfalls bevorzugt Sekundärrohstoffe darstellen. Es kann sich hierbei insbesondere um Verschnitt der Glasfaserherstellung und -verwendung handeln. Hierbei handelt es sich um geschlichtete Glasfasern, d. h. Glasfasern die oberflächlich mit Acrylat-Butadien-Copolymeren, Latex, Kautschukmodifikationen oder ähnlichem beschichtet sind. Dabei darf es sich nicht um Glasfasern in Form eines Gewebes, wie beispielsweise Glasfaservlies handeln, es ist vielmehr wichtig, dass es ich um einzelne Glasfaserbündel handelt (Schnittglasfasern). Die einzelnen Glasfasern sollten dabei Längen von 2 - 20 mm aufweisen. Für die Herstellung der erfindungsgemäß eingesetzten Materialien ist darauf zu achten, dass mindestens 80% der Glasfasern in diesem Längenbereich liegen. Bevorzugt beträgt die Glasfaserlänge 4 - 15 mm, besonders bevorzugt 3 - 11 mm. Die einzelnen Glasfasern haben dabei einen Durchmesser von 6 - 16 µm. Der Anteil der Glasfaserfraktion an dem erfindungsgemäß eingesetzten Werkstoff liegt bei 10 - 30, bevorzugt ca. 14% Glasfasern.

Besonders bevorzugt sind die Glasfasern mit einer Silanschlichte beschlichtet. Derartige Silanschlichten können beispielsweise die allgemeine Formel

(X-R)n-Si-(O-R²)₄₋ₙ

aufweisen. In dieser Formel steht X für eine Amino- oder Hydroxygruppe. n steht für eine ganze Zahl von 1 bis 4, bevorzugt für 1. R steht für eine geradkettige oder verzweigte Alkylengruppe, R² steht für eine Alkylgruppe.

Bevorzugte Silanverbindungen des oben dargestellten Typs sind Aminopropyltrimethoxysilan, Aminobutyltrimethoxysilan, Aminopropyltriethoxysilan, Aminobutyltriethoxysilan, Hydroxypropyltrimethoxysilan und Hydroxypropyltriethoxysilan. Die genannten Verbindungen können auch als Gemische vorliegen. Der Fachmann auf dem Gebiet ist sowohl mit der Anwendung dieser Silanschlichten wie auch mit anderen Silanschlichten vertraut. In der bevorzugten Anwendung enthält der erfindungsgemäß eingesetzte Kunststoff zusätzliche Koppler, beispielsweise auf der Basis von Maleinsäureanhydrat. Als Koppler können auch Derivate der Trimellitsäure (1,2,4-Benzoltricarbonsäure) dienen. Derartige Verbindungen sind beispielsweise aus der DE 196 10 362 prinzipiell bekannt.

Die genannten Koppler können zusammen mit dem Kunststoff oder dem Kunststoffgemisch extrudiert werden. Hierzu werden üblicherweise die Kunststoffe gemahlen, mit dem Koppler gemischt und zu Granulaten oder Pellets verarbeitet. Diese vorbereiteten Granulate bzw. Pellets können dann problemlos weiterverarbeitet werden.

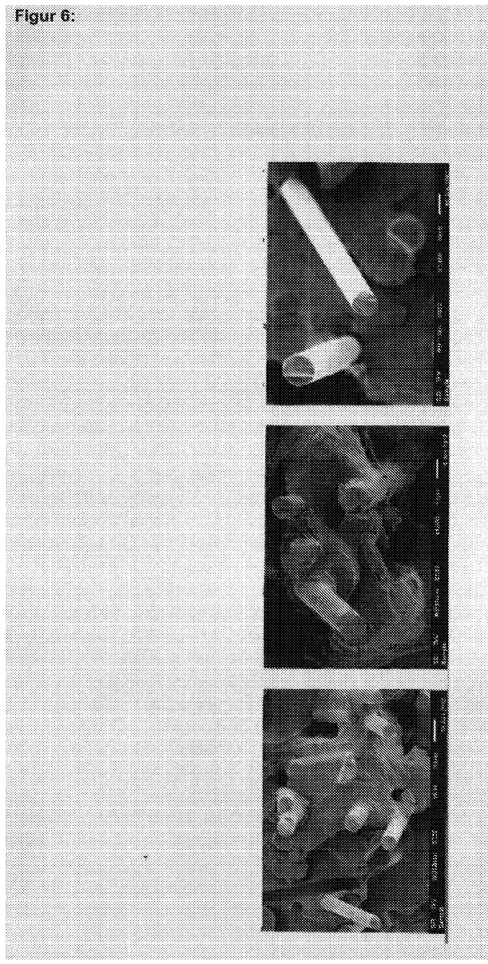

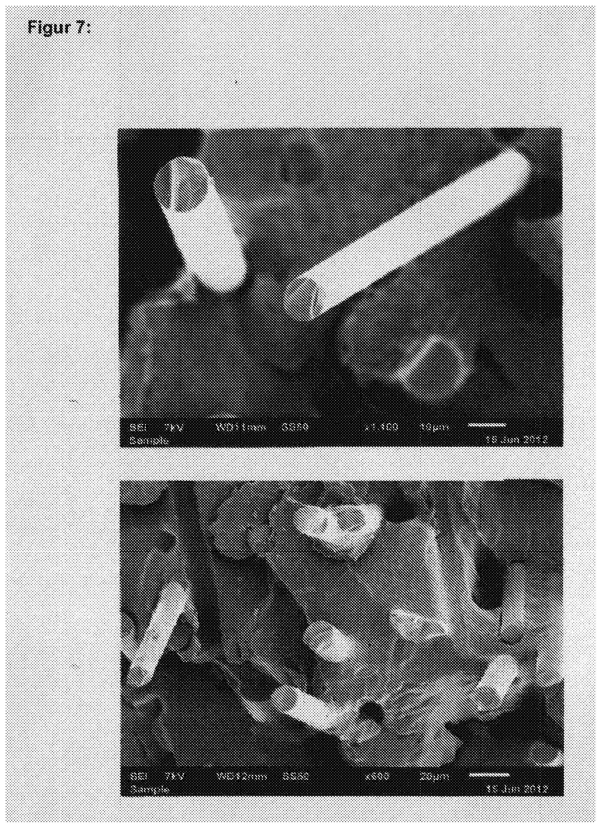

Die erfindungsgemäß besonders bevorzugt eingesetzten Materialien enthalten die oben genannte Silanschlichte und einen Koppler, beispielsweise auf Basis von Maleinsäureanhydrat, und erreichen auf diese Weise besonders hohe Belastbarkeiten. Figur 7 zeigt elektronenmikroskopische Aufnahmen eines derartigen Materials im Vergleich: In der oberen Abbildung sieht man einen erfindungsgemäß eingesetzten Werkstoff, der 28% Glasfasern enthält, ohne dass ein Koppler verwendet wurde. In der unteren Abbildung ist ein entsprechendes Material enthaltend 28% Glasfasern zu sehen, bei dem dem erfindungsgemäß eingesetzten Kunststoffmaterial 1% des Kopplers zugemischt wurde. Deutlich zu erkennen ist die wesentlich bessere Haftung des Kunststoffmaterials an den Glasfasern. Figur 6 zeigt einen ähnlichen Vergleich, bei dem dem Kunststoffmaterial 1% Koppler (unteres Bild), 2% Koppler (mittleres Bild) bzw. kein Koppler (oberes Bild) zugemischt wurde. Auch auf diesen Bildern ist zu erkennen, dass durch die Zugabe des Kopplers die Glasfasern deutlich besser vom Kunststoff umschlossen werden, was zu einer besseren mechanischen Festigkeit führt.

Zur Herstellung des erfindungsgemäß eingesetzten Werkstoffes wird das Kunststoffmaterial zunächst zerkleinert, vorzugsweise mit den Glasfasern vermischt und pelletiert oder agglomeriert. Die Pellets bzw. Agglomerate oder auch die nicht agglomerierten oder pelletierten Vormischungen oder unvermischten Einzelkomponenten werden dann ggf. über eine oder mehrere Dosiereinrichtungen in üblicher Weise, beispielsweise bei Temperaturen zwischen 170° und 230° C extrudiert und regranuliert. Das auf diese Weise hergestellte Regranulat kann dann zur Herstellung der erfindungsgemäßen Formkörper verwendet werden, beispielsweise durch Spritzguss oder Extrusion. Alternativ kann die Verarbeitung direkt (d.h. ohne Regranulierung) zu einem Vollprofil über ein z.B. ölgekühltes Profilwerkzeug mit anschließender Wasserkühlung und Kalibriereinheit verarbeitet werden.

Zur Erreichung einer integralen Schäumung des Profilkernes können chemische oder physikalische Treibmittel in flüssiger oder fester Form, in die Spritzguß- oder Extrusionswerkstoffe eingeführt werden, z.B. Natriumbicarbonat mit Citronensäure oder thermolabile Carbamate.

Vorzugsweise werden hierzu endotherme Schäummittel verwendet. Eine weitere Möglichkeit, zu einer Schäumung zu gelangen, ist die Verwendung von Mikrosphären, die beispielsweise mit Gasen oder verdampfbaren Flüssigkeiten gefüllt sind. Zur Füllung eignen sich besonders Alkane wie Butan, Pentan oder Hexan, aber auch deren halogenierte Derivate, wie beispielsweise Dichlormethan oder Perfluorpentan.

Alternativ kann die Schäumung auch durch Einstellung entsprechender Verfahrensparameter (Temperatur der Extrusion, Abkühlungsrate des Vollprofils) erreicht werden, wenn das Kunststoffmaterial Stoffe enthält, die unter den Verfahrensbedingungen gasförmig werden (z.B. Wasser, Kohlenwasserstoffe, etc.). Vorzugsweise handelt es sich dabei um geschlossene Poren.

Bei aus dem erfindungsgemäß eingesetzten Material hergestellten Eisenbahnschwellen sind die Poren inhomogen verteilt, nämlich insbesondere im Kern des Formkörpers konzentriert.

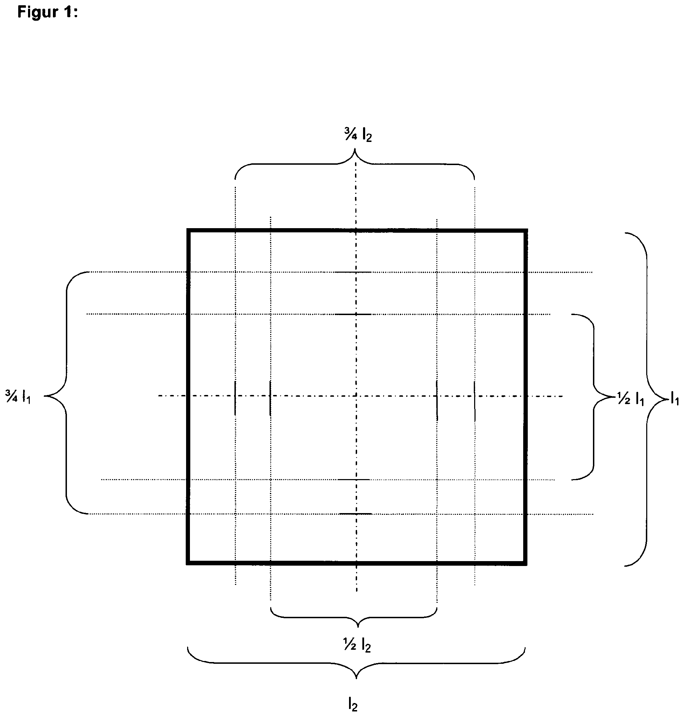

Dies sei an Hand der Figuren 1-3 illustriert:

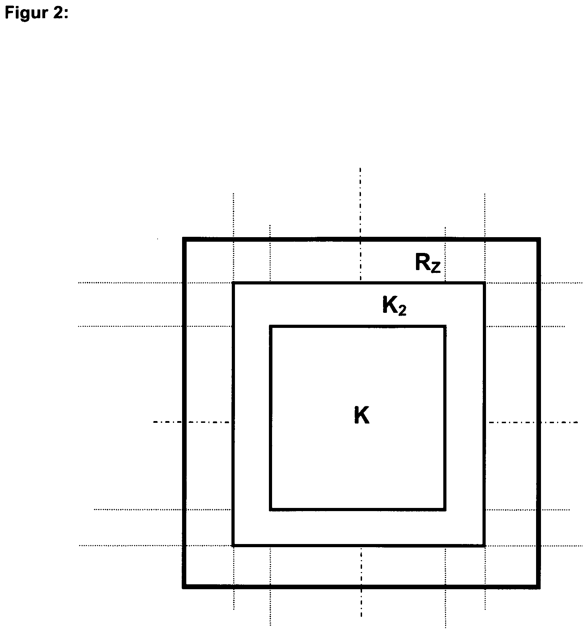

Figuren 1 und 2 zeigen den Querschnitt eines rechtwinkligen, extrudierten Formkörpers mit den Kantenlängen I₁ und I₂. Durch Teilung der Kantenlängen erhält man einen Formkörperkern K mit den Kantenlängen ½ I₁ und ½ I₂, welcher 25% der Gesamtfläche ausmacht. Weiterhin erhält man einen erweiterten Formkörperkern K2 mit den Kantenlängen ¾ I₁ und ¾ I₂, welcher ca. 56% (genauer 9/16) der Gesamtfläche ausmacht. Ferner erhält man eine Randzone R_{z}, deren Fläche ca. 44% (genauer 7/16) der Gesamtfläche ausmacht (I₁ x I₂ - ¾ I₁ x ¾ I₂ = 7/16 x I₁ x I₂). Für die bevorzugte Ausführungsform geschäumter Formkörper aus dem erfindungsgemäß eingesetzten Material ist nun wesentlich, dass im Formkörperkern K mehr als 50% des Gesamtporenvolumens vorhanden sind, wobei die Poren jeweils 1 - 15 mm Durchmesser, vorzugsweise 3 - 7 mm Durchmesser aufweisen sollen. Im erweiterten Formkörperkern K2 sollen mehr als 85 % des Gesamtporenvolumens vorhanden sein. In der Randzone R_{z} sollen weniger als 15%, bevorzugt weniger als 5%, ganz besonders bevorzugt weniger als 1% des Gesamtporenvolumens enthalten sein.

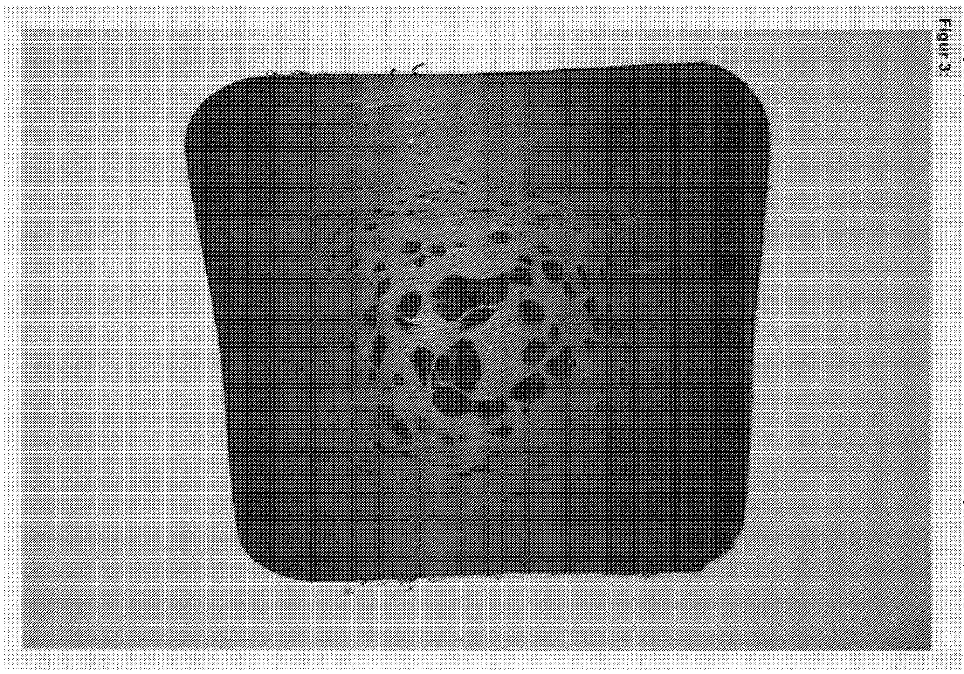

Figur 3 zeigt einen Schnitt eines solchen Materials mit den enthaltenen Poren. Die in den Figuren 1 und 2 angedeuteten geometrischen Verhältnisse lassen sich in analoger Weise auf andere Formkörpergestaltungen und -profile übertragen.

Bei der Herstellung erfindungsgemäßer Eisenbahnschwellen als Formkörper ist in jedem Fall zu beachten, dass die durch die Verfahrensschritte auftretenden Scherkräfte (beispielsweise bei der Extrusion) die Glasfasern nicht zu stark schädigen. Wie eingangs bereits beschrieben ist es für die mechanischen Eigenschaften des erfindungsgemäß eingesetzten Werkstoffs von entscheidender Bedeutung, dass die Glasfasern im erfindungsgemäß eingesetzten Material Längen von 2 - 20 mm aufweisen, so dass mindestens 80% der Glasfasern in diesem Längenbereich liegen.

Bei der Herstellung der erfindungsgemäß eingesetzten Materialien hat sich gezeigt, dass diese auch die hohen Anforderungen an mechanischen Eigenschaften, wie sie beim Bau von Eisenbahnschwellen gefordert werden, erfüllen. So zeigen die erfindungsgemäß eingesetzten Werkstoffe enthaltend ca. 20% Glasfasern in ca. 80% HDPE bei Biegeversuchen ein E-Modul von mindestens 4.500 MPa. In Abhängigkeit von den genauen Prozessparametern wurden auch deutlich höhere Werte gemessen, bis hin zu 5.000 MPa und darüber hinaus. Dies sind Werte, der überraschend deutlich über dem E-Modul des Standes der Technik (DE19503632C1) von ca. 1.500 MPa liegt. Dabei weist das erfindungsgemäß eingesetzte Material eine Zugfestigkeit von ca. 24 MPa auf. Darüber hinaus sind auch Biegefestigkeit, wie auch die Schlagzähigkeit außergewöhnlich hoch.

Erfindungsgemäß eingesetzte Werkstoffe, die unter Verwendung von den oben genannten Silanschlichten und einem Koppler hergestellt wurden, erreichen darüber hinaus Werte von bis zu 800.000 MPa für das Biege-E-Modul bzw. von ca. 7.000 MPa der Biegefestigkeit. Derartige Werte wurden mit den aus dem Stand der Technik bekannten Materialien nicht erreicht, es war auch nicht naheliegend, dass die erfindungsgemäße Modifizierung bekannter Werkstoffe zu derartig hohen Werten führt.

Aufgrund dieser hervorragenden Werte erfüllen die erfindungsgemäß eingesetzten Werkstoffe überraschenderweise die Anforderungen der DIN EN 1346-4 und sind somit als Bahnschwellen geeignet. Aus den erfindungsgemäß eingesetzten Materialien gefertigte Bahnschwellen halten den für diesen Verwendungszweck üblichen Lasten von 85 KN Stand, überstehen dabei mindestens 2 Millionen Lastwechsel und lassen sich mit den üblichen Verankerungssystemen, wie beispielsweise Bahnschwellenschrauben, befestigen. Auch die mehrfache Wiederbefestigung der Schwellen ist möglich. Derartige Bahnschwellen überstehen auch die direkte Sonneneinstrahlung sowie Hitzeinwirkung in hervorragender Weise. Durch Dauerbelastungstests (z.B. bei 64°C) kann diese besondere Eigenschaft nachgewiesen werden.

Vorteile der aus den erfindungsgemäß eingesetzten Materialien gefertigten Bahnschwellen gegenüber Holzschwellen bestehen insbesondere darin, dass diese länger haltbar sind (< 50 Jahre im Vergleich zu 15 - 30 Jahren bei Holzschwellen) und keinerlei Emissionen von Holzschutzmitteln aufweisen. Auch im Vergleich mit Betonschwellen, die durch Abplatzungen verschleißen, weisen die aus den erfindungsgemäß eingesetzten Werkstoffen hergestellten Kunststoffschwellen eine deutlich längere Haltbarkeit auf. Ein besonderer Gesichtspunkt der vorliegenden Erfindung ist daher eine Bahnschwelle bestehend aus dem erfindungsgemäß eingesetzten Material.

Ein besonderer Vorteil der erfindungsgemäßen Bahnschwellen ist die durch die integrale Schäumung erzeugten geschlossenen Poren von 1 - 15 mm Durchmesser, vorzugsweise 3 - 7 mm Durchmesser überraschend hervorgerufene Dämpfung von Körperschallschwingungen im für das menschliche Ohr hörbaren und nicht hörbaren Bereich. Dieser Effekt wird durch den Zusatz von Kautschuk-Mehl zur Extrusionsmischung weiter verbessert. Der Zusatz erfolgt in diesem Fall in einem Mengenbereich von 1 - 8 Masse-%, vorzugsweise 2 - 3 Masse-% der Polyolefin-Glasfaser-Mischung.

Körperschall führt bei Schwellen aus Beton zu einem Zerreiben des Schotters. Letzterer führt zu einem erhöhten Wartungsaufwand von Schienenverbindungen, da sich derart geschädigte Schotterbetten nicht mehr durch Stopfen verfestigen und aufarbeiten lassen. Die Körperschalldämpfungseigenschaften des erfindungsgemäß eingesetzten Materials führen somit zu einer deutlichen Verringerung bis zur Einstellung des genannten Schotterabriebs und somit zu einer Verlängerung der Liegezeiten der Schienen-Schwellen-Gleisbett-Konstruktion. Außerdem führt der Körperschall durch Übertragung auf an das Gleisbett angrenzende Bauten zu Bauwerksschäden durch Rißbildungen und Abplatzungen im Bauwerk und zur Lärmbelästigung von Anwohnern, was durch die erfindungsgemäße Kunststoffschwelle entscheidend verringert wird.

Ein weiterer Vorteil der erfindungsgemäßen Formkörper, insbesondere Bahnschwellen, ist die durch die integrale Schäumung erzeugte, verminderte Materialdichte. Es wird daher weniger Material verbraucht, was zu entsprechenden Kosteneinsparungen führt. Die Formkörper, also Eisenbahnschwellen, sind daher bei gleichem Volumen leichter und daher einfacher im Transport und im Einbau. Die Dichte von erfindungsgemäßen Formkörpern kann auf diese Weise beispielsweise von ca. 1,1 -1,4 g/cm³ (ungeschäumtes Material) auf 0,75 - 1,25 g/cm³, vorzugsweise ca. 0,95 g/cm³ (geschäumtes Material) gesenkt werden.

Bei der Herstellung von Bahnschwellen aus dem erfindungsgemäß eingesetzten Material können gleichzeitig ein oder mehrere Kanäle bei der Extrusion mittels entsprechend angepasster Werkzeuge eingeformt werden. So kann beispielsweise ein zentraler Kanal gebildet werden, der seinerseits entweder rund oder oval ist oder auch eine andere geometrische Form aufweisen kann. Mittels dieses Kanals kann das Material bei der Herstellung gekühlt werden. Das Extrusionswerkzeug ist dann so ausgeformt, dass an dieser Stelle ein Kühlkanal verläuft.

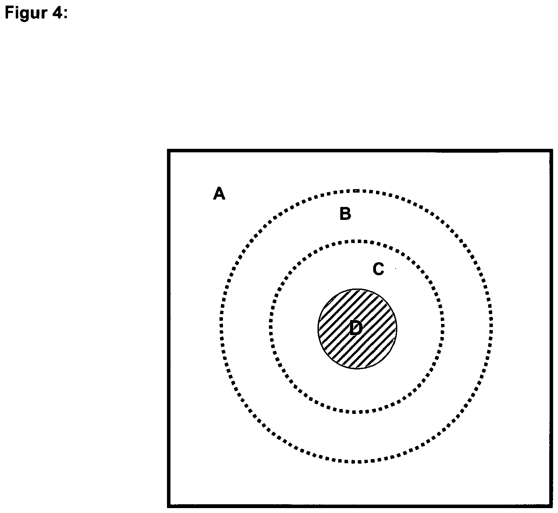

Im Fall des erfindungsgemäß eingesetzten Materials mit integraler Schäumung führt die Einführung eines derartigen Kanals unter entsprechender Kühlung zu einer entsprechend anderen Porenverteilung, so wie sie in der Figur 4 schematisch dargestellt ist. Der zentrale Kanal ist in der Figur 4 mit D gekennzeichnet. Der Formkörper weist in seinem äußeren Bereich (A) sowie in einem um den Kanal D konzentrischen Bereich (C) wenig bis gar keine Poren auf. In dem mittleren Teil B sind die Mehrzahl der Poren enthalten. Bei dieser Art der Porenverteilung ist die mechanische Stabilität des gesamten Formkörpers sichergestellt, während gleichzeitig die bereits oben dargestellten Vorteile der Schäumung erhalten bleiben. Ein wichtiger Vorteil des in dieser Weise geformten Kanals ist die Möglichkeit, Kabel durch die Schwelle hindurchzuführen. Diese Form der Schwelle löst ein häufig auftretendes Problem von Bahnbetreibern, nämlich elektrische Kabel (z.B. zur Steuerung von Signalen und Weichen) von einer Seite einer Schiene auf die andere Seite führen zu müssen. Mit den üblichen Methoden muss ein Tunnel unter der Schiene gegraben werden, während der erfindungsgemäße Formkörper eine einfache Durchführung gestattet. Es versteht sich von selbst, dass diese Durchführung auch zu jedem beliebigen Zeitpunkt vorgenommen werden kann, ohne dass der Schienenverkehr unterbrochen werden muss.

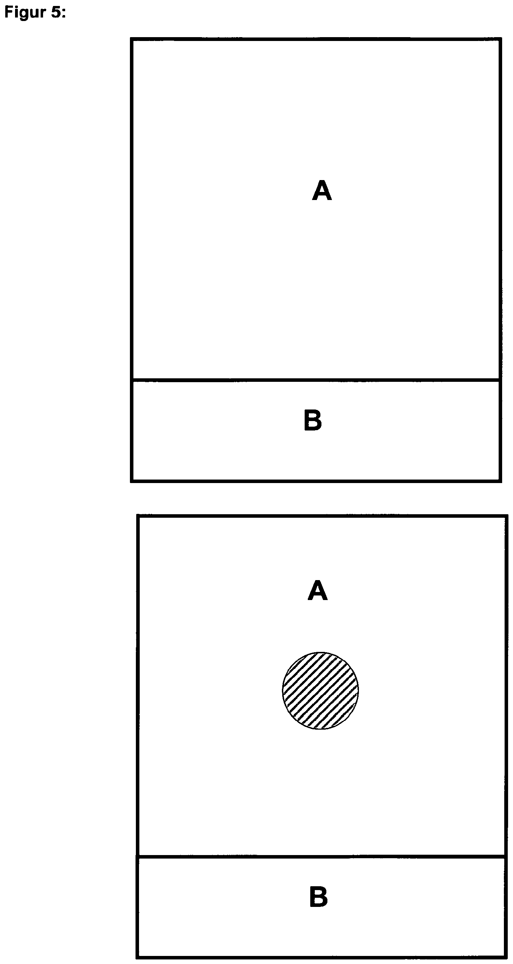

Eine weitere Ausführungsform der Erfindung besteht darin, einen Formkörper aus zwei oder mehr Schichten zu bilden. Hierzu wird, vorzugsweise im Wege der gleichzeitigen Extrusion, dem erfindungsgemäßen Formkörper auf einer Seite eine oder mehrere Schichten an-extrudiert, wie es beispielhaft in der Figur 5 zu sehen ist. Eine Seite des erfindungsgemäßen Formkörpers A enthält eine zusätzliche Schicht eines Materials anderer Zusammensetzung. Bei diesem anderen Material handelt es sich beispielsweise um ein weicheres Material, welches z.B. einen Gummianteil enthält. Bei einer derartig ausgestalteten Bahnschwelle zeigt sich, dass sich der Schotter deutlich besser in das Material eindrückt, was zu einer erwünschten Veränderung des Querverschiebewiderstands beiträgt. Gleichzeitig erfolgt eine weitere Schalldämpfung und eine weitere Verringerung des Schotterabriebs. Im Rahmen einer derartigen Ausführungsform kann die ergänzende Schicht B beispielsweise 5% - 30% Gummi enthalten. Der hierzu notwendige Gummianteil stammt bevorzugt aus Produktionsabfällen, beispielsweise aus der Produktion von Reifen oder von Gummidichtungen aller Art. Möglich ist selbstverständlich auch, mehrere Schichten mit verschiedenen Gummianteilen anzubringen. Selbstverständlich ist auch in dieser Ausführungsform die Bildung eines Kanals möglich, so wie in der Figur 5 unten schematisch dargestellt. Im Fall eines geschäumten Körpers ist die Porenverteilung analog zur oben bereits dargestellten Figur 4.

## Patentansprüche

1. Eisenbahnschwelle, enthaltend einen thermoplastischen Werkstoff, enthaltend mindestens 75% Polyolefine aus Recyclingmaterial und mindestens 10% geschlichtete Glasfaser, wobei es sich bei den Glasfasern um Schnittglasfasern handelt von denen wenigstens 80% eine Länge von 2-20 mm aufweisen, **dadurch gekennzeichnet, dass** in einer Kernzone (K), entsprechend 25% der Querschnittsfläche der Eisenbahnschwelle, geschlossene Poren von jeweils 1-15 mm Durchmesser enthalten sind, wobei die in der Kernzone (K) enthaltenen Poren mehr als 50% des Gesamtporenvolumens ausmachen.

2. Eisenbahnschwelle gemäß Anspruch 1, **dadurch gekennzeichnet, dass** als Recylingpolyolefin Material aus formstabilen Kunststoffbehältern verwendet wird.

3. Eisenbahnschwelle gemäß Anspruch 2, **dadurch gekennzeichnet, dass** als Kunststoffflaschenmaterial Ölgebinde verwendet werden.

4. Eisenbahnschwelle gemäß Anspruch 1, **dadurch gekennzeichnet, dass** die Glasfasern beschichtet sind mit Acrylat-Butadien-Copolymeren, Latex, oder anderen Kautschuken.

5. Eisenbahnschwelle gemäß Anspruch 1, **dadurch gekennzeichnet, dass** die Glasfasern mit Silanschlichten beschichtet sind und dass den Polyolefinen ein Koppler zugegeben wird.

6. Eisenbahnschwelle gemäß Anspruch 5, **dadurch gekennzeichnet, dass** als Koppler ein Maleinsäureanhydrat-Derivat verwendet wird.

7. Eisenbahnschwelle gemäß einem der vorangehenden Ansprüche, **gekennzeichnet durch** ein Dichte von 0,9 - 1,0 g/cm³.

8. Eisenbahnschwelle gemäß einem der vorangehenden Ansprüche, enthaltend einen oder mehrere zentrale Kanäle.

## Claims

1. Railway sleeper, comprising a thermoplastic material, comprising at least 75% polyolefins from recycling material and at least 10% sized glass fibre, wherein the glass fibres are chopped glass fibres out of which at least 80% have a length of 2-20 mm, **characterized in that** a core zone (K), corresponding to 25% of the cross-sectional area of the railway sleeper comprises closed pores with mm diameter each, wherein the pores contained in the core zone (K) make up for more than 50% of the total pore volume.

2. Railway sleeper according to claim 1, **characterized in that** material of dimensionally stable plastic containers is used as recycling polyolefin material.

3. Railway sleeper according to claim 2, **characterized in that** oil containers are used as plastic bottle material.

4. Railway sleeper according to claim 1, **characterized in that** the glass fibres are coated with acrylate butadiene copolymers, latex or other rubbers.

5. Railway sleeper according to claim 1, **characterized in that** the glass fibres are coated with silane finishing and that a coupler is added to the polyolefins.

6. Railway sleeper according to claim 5, **characterized in that** a maleic acid anhydrate derivate is used as a coupler.

7. Railway sleeper according to one of the preceding claims, **characterized by** a density of 0.9 - 1.0 g/cm3.

8. Railway sleeper according to one of the preceding claims, comprising one or more central channels.

## Revendications

1. Traverse de chemin de fer, comprenant un matériau thermoplastique, comprenant au moins 75% de polyoléfines de matériel recyclé et au moins 10% de fibres de verre encollées, les fibres de verre étant des fibres de verre coupées dont 80% au moins ont une longueur de 2-20 mm **caractérisé en ce qu'**une zone centrale (K) correspondant à 25% de la section transversale de la traverse de chemin de fer comprend des pores fermés avec un diamètre de mm, les pores contenus dans la zone centrale (K) représentent plus de 50% du volume total des pores.

2. Traverse de chemin de fer selon la revendication 1, **caractérisée en ce que** du matériel de conteneurs en plastique de forme stable est utilisé en tant que polyoléfine recyclé.

3. Traverse de chemin de fer selon la revendication 2, **caractérisée en ce que** des bidons d'huile sont utilisés en tant que matériel de bouteilles en plastique.

4. Traverse de chemin de fer selon la revendication 1, **caractérisée en ce que** les fibres de verre sont recouvertes de copolymères d'acrylate butadiène, de latex ou d'autres caoutchoucs.

5. Traverse de chemin de fer selon la revendication 1, **caractérisée en ce que** les fibres de verres sont recouvertes d'encollages de silane et **en ce qu'**un coupleur est ajouté aux polyoléfines.

6. Traverse de chemin de fer selon la revendication 5, **caractérisée en ce que** un dérivé d'anhydrate d'acide maléique est utilisé en tant que coupleur.

7. Traverse de chemin de fer selon une des revendications précédentes, **caractérisée par** une densité de 0,9 - 1,0 g/cm³.

8. Traverse de chemin de fer selon une des revendications précédentes, comprenant un ou plusieurs canaux centraux.
